# EUROPEAN PATENT APPLICATION

(11) **EP 3 200 307 A1**
(43) Date of publication of application: **02.08.2017**
(21) Application number: 15844600.5
(22) Date of filing: 25.09.2015
(51) Int. Cl.: H02J 3/38, H01M 8/04858, H02J 3/46, H01M 8/10, H01M 8/12

(54) **POWER SUPPLY DEVICE, POWER SUPPLY SYSTEM, AND POWER SUPPLY METHOD**

(30) Priority: 26.09.2014 JP 2014196928
(71) Applicant: Kyocera Corporation, Kyoto-shi, Kyoto 612-8501 (JP)
(72) Inventor: NISHIMORI, Masanori, Kyoto-shi Kyoto 612-8501 (JP)
(74) Representative: Schwabe - Sandmair - Marx
(86) International application number: PCT/JP2015/004875
(87) International publication number: WO 2016/047146

(57) **Abstract**

A power supply apparatus configured to control output power from a fuel cell module that generates power using combustion gas includes a controller that, during operation in parallel with other power supply apparatuses that supply output power from other fuel cell modules to a load , controls the output power from one fuel cell module among the fuel cell module and the other fuel cell modules until the one fuel cell module reaches rated power output, while suppressing the output power from each fuel cell module, other than the one fuel cell module, that has not reached the rated power output.

## Description

### CROSS-REFERENCE TO RELATED APPLICATION

This application claims priority to and the benefit of Japanese Patent Application No. 2014-196928 filed September 26, 2014, the entire contents of which are incorporated herein by reference.

### TECHNICAL FIELD

The present disclosure relates to a power supply apparatus, a power supply system, and a power supply method. In greater detail, the present disclosure relates to a power supply apparatus that supplies power output by a plurality of distributed power sources such as a fuel cell, a power supply system in which a plurality of such power supply apparatuses are connected, and a power supply method in such a system.

### BACKGROUND

In recent years, research has been done on a system that connects a plurality of distributed power sources, such as solar cells and fuel cells, as power generation apparatuses and supplies power generated by the power generation apparatuses. The power generation apparatuses used as these distributed power sources for example include fuel cells such as a Polymer Electrolyte Fuel Cell (PEFC) and a Solid Oxide Fuel Cell (SOFC). A system that uses a plurality of these distributed power sources has also been proposed.

For example, a system in which a plurality of fuel cell units with the same rated power output are connected in parallel as distributed power sources has been proposed (for example, see JP 2014-103092 A (PTL 1)). The system disclosed in PTL 1 equalizes the output of the fuel cell units by having a plurality of current converters each detect the amount of power generation by the other fuel cell units.

### CITATION LIST

### Patent Literature

PTL 1: JP 2014-103092 A

### SUMMARY

### (Technical Problem)

When the output of power generated by each fuel cell unit is low in a system in which a plurality of power generation apparatuses such as fuel cells are connected as distributed power sources, the gas flow decreases, and the temperature of the fuel cell module lowers. In such a case, there is a risk of combustion of the fuel cell units stopping. In such a system, there is also a risk of combustion of the fuel cell units stopping during an idle state, or when the power consumption by load devices is small.

Therefore, it would be helpful to provide a power supply apparatus, a power supply system, and a power supply method that reduce the possibility of combustion stopping in a plurality of distributed power sources.

### (Solution to Problem)

To this end, a first aspect of the present disclosure provides a power supply apparatus configured to control output power from a predetermined fuel cell module that generates power using combustion gas, the power supply apparatus including:
a controller that, during operation in parallel with one or more other power supply apparatuses that supply output power from one or more other fuel cell modules to a load, controls the output power from one fuel cell module among the predetermined fuel cell module and the other fuel cell modules until the one fuel cell module reaches rated power output, while suppressing the output power from each fuel cell module, other than the one fuel cell module, that has not reached the rated power output.

A second aspect of the present disclosure provides a power supply system including:
a plurality of fuel cell modules configured to generate power using combustion gas; and
a plurality of power supply apparatuses configured to supply output power to a load from the plurality of fuel cell modules;
such that one of the plurality of power supply apparatuses comprises a controller that, during operation in parallel with one or more other power supply apparatuses among the plurality of power supply apparatuses, controls the output power from one fuel cell module among the plurality of fuel cell modules until the one fuel cell module reaches rated power output, while suppressing the output power from each fuel cell module, other than the one fuel cell module, that has not reached the rated power output.

A third aspect of the present disclosure provides a power supply method used in a power supply system, the power supply system including:
a plurality of fuel cell modules configured to generate power using combustion gas; and
a plurality of power supply apparatuses configured to supply output power to a load from the plurality of fuel cell modules;
the power supply method including:
   operating the plurality of power supply apparatuses in parallel; and
   controlling the output power from one fuel cell module among the plurality of fuel cell modules until the one fuel cell module reaches rated power output, while suppressing the output power from each fuel cell module, other than the one fuel cell module, that has not reached the rated power output.

### (Advantageous Effect)

A power supply apparatus, a power supply system, and a power supply method according to the present disclosure can reduce the possibility of combustion stopping in a plurality of distributed power sources.

### BRIEF DESCRIPTION OF THE DRAWINGS

In the accompanying drawings:
FIG. 1 is a functional block diagram schematically illustrating a power supply system according to one of the disclosed embodiments;
FIG. 2 is a functional block diagram illustrating a power supply apparatus according to one of the disclosed embodiments in greater detail;
FIGS. 3A, 3B, 3C, 3D, and 3E are conceptual diagrams illustrating operations of the power supply apparatus according to one of the disclosed embodiments;
FIG. 4 is a flowchart illustrating operations of the power supply apparatus according to one of the disclosed embodiments; and
FIG. 5 is a flowchart illustrating other operations of the power supply apparatus according to one of the disclosed embodiments.

### DETAILED DESCRIPTION

The following describes an embodiment of the present disclosure with reference to the drawings.

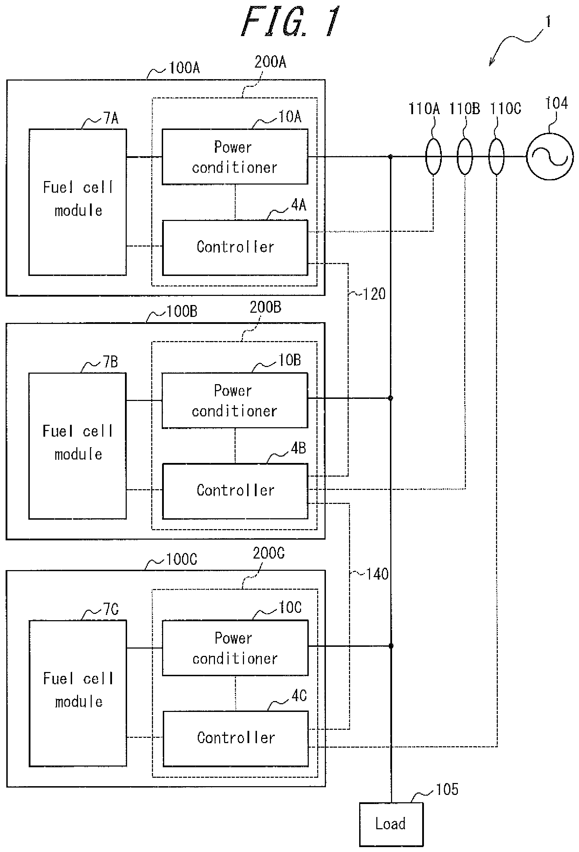

FIG. 1 is a functional block diagram schematically illustrating a power supply system that includes a plurality of power supply apparatuses according to this embodiment.

As illustrated in FIG. 1, a power supply system 1 that includes power supply apparatuses according to this embodiment is configured to include a fuel cell unit 100A, a fuel cell unit 100B, and a fuel cell unit 100C. FIG. 1 illustrates an example of the power supply system 1 including three power generation units, i.e. the fuel cell units 100A to 100C, as distributed power sources. The power supply system 1 according to this embodiment, however, may be configured to include any number, greater than one, of distributed power sources with a configuration like that of the fuel cell units 100A to 100C. Hereinafter, an explanation of elements and functional components that are well known is simplified or omitted as appropriate.

As illustrated in FIG. 1, the fuel cell unit 100A includes a fuel cell module 7A, a power conditioner (inverter) 10A, and a controller 4A. As illustrated in FIG. 1, the power supply apparatus 200A according to this embodiment includes the power conditioner 10A and the controller 4A. In FIG. 1, solid lines mainly indicate the path of power, whereas dashed lines mainly indicate the path of control signals or signals that communicate a variety of information.

The fuel cell module 7A is connected to a grid 104 and generates power to supply to a load 105. The grid 104 may be a general, commercial power grid. The fuel cell module 7A may, for example, be configured by any of a variety of fuel cells or the like, such as a Polymer Electrolyte Fuel Cell (PEFC) or Solid Oxide Fuel Cell (SOFC). This embodiment describes an example of the fuel cell module 7A being configured by an SOFC.

The fuel cell module 7A configured by a fuel cell such as an SOFC can generate power with a fuel cell that causes gas, such as hydrogen and oxygen, supplied from the outside to undergo an electrochemical reaction. The fuel cell module 7A can then output the generated power. In this embodiment, the fuel cell module 7A may be capable of independent operation, whereby at startup time, the fuel cell module 7A starts to operate upon receiving power from the grid 104 but then operates without receiving power from the grid 104 after starting up. In this embodiment, the fuel cell module 7A includes other functional components as necessary, such as a reformer, in order to allow independent operation. In this embodiment, the fuel cell module 7A can be configured by a typical, widely known fuel cell. The configuration of the fuel cell module 7A is further described below from the perspective of a fuel cell.

The power generated by the fuel cell module 7A can be supplied through the power conditioner 10A to a variety of loads 105 that consume power. In an actual consumer's facility or the like, the power output from the fuel cell unit 100A is supplied to the load 105 after passing through a distribution board or the like, but such a member is omitted here. The load 105 may be any of a variety of devices to which power is supplied from the power supply system 1, such as household appliances used by the user. In FIG. 1, the load 105 is illustrated as one member, but the load 105 is not limited to being one member and may be any number of devices.

The power conditioner 10A (inverter) converts the DC power generated by the fuel cell module 7A into AC power. In greater detail, the power conditioner 10A first raises or lowers the voltage of the DC power generated by the fuel cell module 7A with a DC/DC converter and then converts the power to AC power with a DC/AC inverter. The power conditioner 10A may be configured using a typical inverter and may have a typical, widely-known structure. Hence, details are omitted.

The controller 4A controls and manages the fuel cell unit 100A overall, starting with the functional components of the fuel cell unit 100A. The controller 4A may, for example, be configured to include a microcomputer, a processor (CPU), or the like. The controller 4A is described below as being provided with a memory that stores a variety of programs and a variety of information. This memory also stores algorithms, a variety of reference tables such as lookup tables (LUT), and the like that are used for data analysis, various calculations, and the like performed by the controller 4A.

In particular, in this embodiment, the controller 4A controls the output of power generated by the fuel cell module 7A. In order to perform such control, the controller 4A for example can control power generation of the fuel cell module 7A and control output of the power conditioner 10A. Therefore, as illustrated in FIG. 1, the controller 4A is connected by control lines to the fuel cell module 7A and the power conditioner 10A. The following mainly focuses on operations of the controller 4A and the like pertaining to control that is unique to this embodiment.

As illustrated in FIG. 1, the fuel cell units 100A, 100B, and 100C can each have a nearly identical configuration. Therefore, details on the configuration of the fuel cell units 100B and 100C are omitted. In this embodiment, the fuel cell units 100B and 100C are not limited to having the same configuration as the fuel cell unit 100A and may have different configurations. In this embodiment, it suffices for the fuel cell units 100A, 100B, and 100C to be capable of connecting to the grid 104 and capable of controlling output of power supplied to the load 105. In other words, the power supply system 1 is configured to include a plurality of fuel cell units 100A, 100B, and 100C that connect to the grid 104 and can control the output of power supplied to the load 105.

In this way, the power supply system 1 in this embodiment includes a plurality of power supply apparatuses 200A, 200B, and 200C and a plurality of fuel cell modules 7A, 7B, 7C respectively connected thereto. The fuel cell unit 100A supplies power output from the fuel cell module 7A to the load 105. The fuel cell unit 100B similarly supplies power output from the fuel cell module 7B to the load 105. The fuel cell unit 100C similarly supplies power output from the fuel cell module 7C to the load 105.

As illustrated in FIG. 1, in the power supply system 1, the fuel cell unit 100A is connected to the other fuel cell units 100B and 100C. With such a configuration, the power supply apparatus 200A, power supply apparatus 200B, and power supply apparatus 200C can operate in parallel. In FIG. 1, the DC power generated by the fuel cell modules 7A to 7C is connected after being converted to AC power, but the power supply system 1 according to this embodiment is not limited to this configuration. Instead, power may be connected while still in the form of DC power.

Furthermore, as illustrated in FIG. 1, in the power supply system 1, the power supply apparatuses 200A to 200C are connected to corresponding current sensors 110A to 110C. The current sensors 110A to 110C may, for example, be Current Transformers (CT). Any element that can detect current, however, may be used as the current sensors 110A to 110C.

The current sensors 110A to 110C can detect when the power output by the power supply system 1 is flowing in reverse to the grid 104. Therefore, as illustrated in FIG. 1, the current sensors 110A to 110C are disposed at a position to detect the portion of the power output by the fuel cell units 100A to 100C that flows to the grid 104 after being supplied to the load 105. The controllers 4A to 4C are notified directly or indirectly of the current detected by the current sensors 110A to 110C by wired or wireless communication. The controller 4A can calculate the reverse flow power from the current detected by the current sensors 110A to 110C.

In the power supply system 1 according to this embodiment, as illustrated in FIG. 1, the power supply apparatuses 200A and 200B are connected, and the power supply apparatuses 200B and 200C are connected. In greater detail, the controllers 4A and 4B are preferably connected, and the controllers 4B and 4C are preferably connected, but connection is not limited to this configuration. The power generation apparatuses may be connected in any way that allows them to communicate. Furthermore, such connection may be wired or wireless.

In the example illustrated in FIG. 1, the controllers 4A and 4B are connected by a communication line 120, and the controllers 4B and 4C are connected by a communication line 140. By being connected in this way, the power supply apparatuses 200A to 200C can exchange and share a variety of information. These communication lines 120 and 140 may be dedicated lines, or existing equipment may be used. With the communication lines 120 and 140, data can be exchanged between the power supply apparatuses 200A to 200C in the power supply system 1.

Next, the fuel cell unit 100A according to this embodiment is further described from the perspective of a fuel cell power generation unit. Since the fuel cell units 100B and 100C can have the same configuration, the following example is described with reference to the "fuel cell unit 100" or the like.

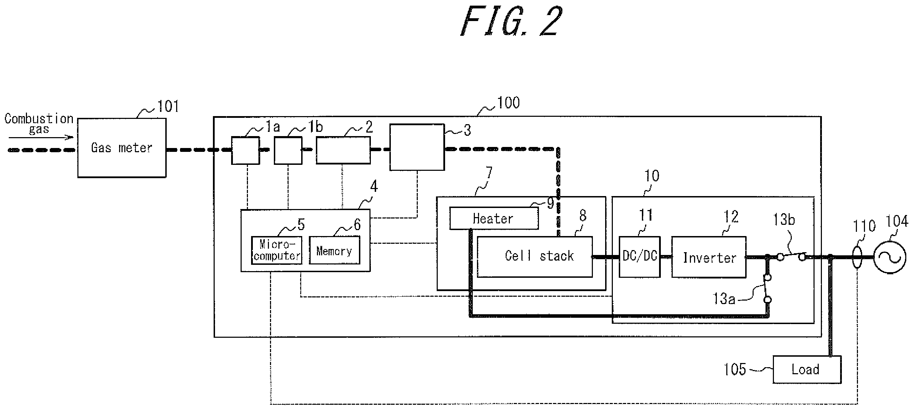

FIG. 2 is a block diagram illustrating the configuration of the fuel cell unit 100 according to this embodiment. In FIG. 2, solid lines in bold indicate the path over which power flows, and dashed lines in bold indicate the path over which fuel gas flows. Thin dashed lines represent control signals or transmitted information. The fuel cell unit 100 according to this embodiment includes a fuel cell module 7, two gas solenoid valves 1a and 1b, a gas flow meter 2, a gas pump 3, a controller 4, and a power conditioner 10. The fuel cell module 7 in this embodiment is described as being an SOFC, as mentioned above.

The fuel cell module 7 is a module that receives a supply of gas fuel and generates power. The fuel cell module 7 includes a cell stack 8 for generating power by reacting the fuel gas supplied via a gas meter 101 with air, a heater 9 for heating the cell stack 8 and maintaining the cell stack 8 at a temperature appropriate for power generation, and the like. The cell stack 8 is configured by layering a plurality of power generation cells made from high heat-resistant material, such as ceramic. The heater 9 receives a supply of power from the fuel cell module 7 or the grid 104 and heats the cell stack 8. In this embodiment, the heater 9 is provided to increase the temperature of the cell stack 8, but the heater 9 may be configured also to fulfill the function of an anti-freeze heater for the fuel cell unit 100.

In this embodiment, the heater 9 is configured to receive a supply of AC power that has passed through the inverter 12 or power from the grid 104, but the present disclosure is not limited to this configuration. The cell stack 8 may be configured to supply the generated DC power directly to the heater 9.

The gas solenoid valves 1a and 1b are two valves that open and close the gas supply path to the fuel cell module 7 using the force of an electromagnet. In this embodiment, the gas solenoid valves 1a and 1b open and close the path of fuel gas supplied to each household via the gas meter 101. The two gas solenoid valves 1a and 1b illustrated in FIG. 2 are arranged in series. As a result, even if one of the gas solenoid valves malfunctions and is no longer able to stop the gas supply, the gas supply can reliably be stopped by operating the other gas solenoid valve.

The gas flow meter 2 measures the gas flow of fuel gas supplied to the fuel cell module 7 through the gas meter 101 and the gas solenoid valves 1a and 1b. Gas flow information measured every fixed sampling time is transmitted to the controller 4 by wired communication or wireless communication.

The gas pump 3 adjusts the gas flow supplied to the fuel cell module 7 by shaking a diaphragm provided inside a pump head. The below-described controller 4 adjusts the gas flow supplied to the fuel cell module 7 by controlling the gas pump 3 based on gas flow information obtained from the gas flow meter 2.

As illustrated, the controller 4 includes a microcomputer 5 that executes programs and a memory 6 that stores programs and a variety of information. The microcomputer 5 acquires information from each functional block inside the fuel cell unit 100 and executes programs for controlling the functional blocks. The microcomputer 5 may be configured by any microcontroller, microprocessor, or the like. As illustrated by the dashed lines in FIG. 2, the controller 4 acquires a variety of information from the gas flow meter 2, the fuel cell module 7, the power conditioner 10, and the like. Based on the acquired information, the controller 4 transmits control signals, indicated by the similar dashed lines, to control the gas solenoid valves 1a and 1b, gas pump 3, fuel cell module 7, and power conditioner 10. The transmission of various signals indicated by the dashed lines may be by wired communication or wireless communication.

The power conditioner 10 (inverter) converts the power generated by the fuel cell module 7 and supplies the power to the load 105 or the like. The power conditioner 10 includes a DC/DC converter 11, an inverter 12, and switches 13a and 13b.

The DC/DC converter 11 raises the voltage of the DC power supplied from the fuel cell module 7 while keeping the power as DC power and outputs the result to the inverter 12.

The inverter 12 converts the DC power that was output via the DC/DC converter 11 from the fuel cell module 7 to AC power at 100 V or 200 V and supplies the result to the load 105 or the like.

The switches 13a and 13b are each constituted by an independent relay, transistor, or the like and are each independently controlled to turn on and off via a control signal from the controller 4. By turning the switch 13b on, the controller 4 supplies power from the inverter 12 instead of power from the grid 104 to the load 105. In terms of emphasizing power generation efficiency, the fuel cell module 7 is preferably run continuously, but the fuel cell module 7 may also perform a load following operation that follows the power consumption by the load 105. By turning the switch 13a on, the controller 4 supplies power from the inverter 12 or the grid 104 to the heater 9.

The load 105 is a load that operates on single-phase AC power at 100 V or 200 V, which is used in households. Examples of the load 105 include electrical appliances for which a power outage should be avoided insofar as possible, such as a refrigerator, emergency lighting, a water heating system, or a household network server; household loads such as a dryer, a home video game machine, or an audio system for enjoying music; and the like.

In this embodiment, single-phase AC power at 200 V or single-phase AC power at 100 V is output to the load 105, but the present disclosure is not limited to this configuration. Three-phase three-wire power at 200 V is often used in industrial refrigerators, air conditioners, for driving motors in factories, and the like. Therefore, instead of the inverter 12, an inverter that converts to three-phase power at 200 V may be provided.

In this embodiment, examples of the connected load 105 have been provided based on electrical devices usable in Japan, but modifications may be made taking into consideration use of electrical devices usable in countries other than Japan. For example, an inverter that can output AC power of 220 V to 240 V may be provided instead of the inverter 12 for a configuration that allows connection of electrical devices usable in Asia, Oceania, and Europe.

Next, the operations of the power supply apparatuses 200A to 200C in the power supply system 1 according to this embodiment are described.

When the power supply system 1 according to this embodiment begins to operate, one of a plurality of power supply apparatuses (for example, 200A to 200C) may be selected and perform control as a master apparatus. In this case, among the plurality of power supply apparatuses (for example, 200A to 200C), the apparatuses not selected as the master apparatus preferably perform control as slave apparatuses. As one example, the following describes the case of the power supply apparatus 200A being the master and controlling operation of the other power supply apparatuses 200B and 200C that are slaves.

As described above, when operations of the power supply system 1 begin and the system as a whole increases the power supply to the load 105, then for example if the output of each of the fuel cell modules 7A, 7B, and 7C is averaged to be approximately equal, the output of each fuel cell module becomes low. In this case, as described above, the gas flow supplied to each fuel cell module decreases, and the temperature of the fuel cell module lowers, leading to the risk of combustion of the fuel cell unit stopping.

In this embodiment, as described below, the temperature of the fuel cell modules 7A, 7B, and 7C is not lowered insofar as possible by performing (1) allocation control of output power and (2) switching control of output power. The following describes the control in (1) and (2) in greater detail.

### (1) Allocation Control of Output Power

In this embodiment, among the plurality of fuel cell modules 7A, 7B, and 7C, a fuel cell module with low output is prevented from occurring insofar as possible. Therefore, in this embodiment, the output of all of the fuel cell modules is not equalized. Rather, control is performed first to increase the output of only one of the fuel cell modules, and then to increase the output of a second fuel cell module once the first fuel cell module reaches the rated power output. Here, among the fuel cell modules for which power is not increased, control is performed to suppress the output of any fuel cell module that has not reached rated power output.

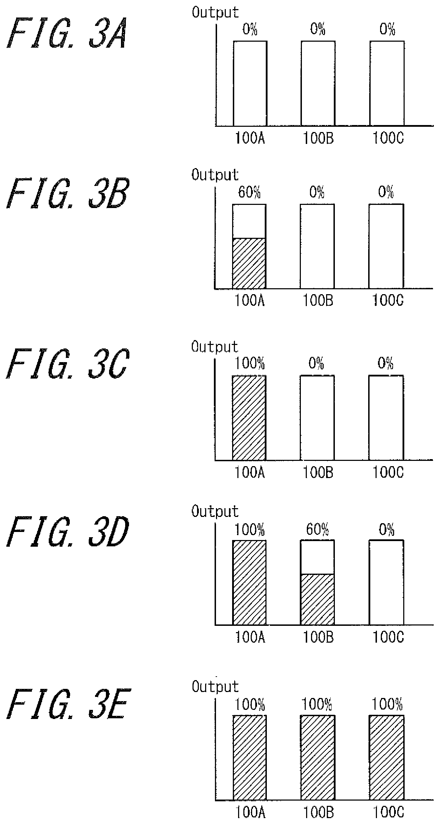

FIGS. 3A to 3E are conceptual diagrams illustrating the control to allocate output power in this embodiment. FIGS. 3A to 3E each represent examples of the output (%) of power supplied by the fuel cell units 100A, 100B, and 100C as a bar graph.

FIG. 3A represents the operation start time of the power supply system 1. As illustrated in FIG. 3A, at the operation start time of the power supply system 1, the fuel cell modules 7A, 7B, and 7C are each in a standby state, and the power output by each of the fuel cell units 100A, 100B, and 100C is 0%.

Upon starting the operations of the power supply system 1 at the point in time of FIG. 3A, the power supply apparatus 200A (master) first performs control to increase the output of only one of the fuel cell modules (here, 7A) and does not increase (suppresses) the output of the other fuel cell modules (here, 7B and 7C). FIG. 3B shows that as a result of this control, the output of the fuel cell module 7A increases, and the power supplied by the fuel cell unit 100A becomes 60% of the rated power. In FIG. 3B, the output of the other fuel cell modules (here, 7B and 7C) remains unincreased.

FIG. 3C shows that by the above-described control, the power supplied by the fuel cell unit 100A reaches the rated power (100%). At this time, the power supply apparatus 200A (master) performs control to increase the output of only the next fuel cell module (here, 7B), without increasing (i.e. by suppressing) the output of the other fuel cell module (7C) that has not yet reached rated power output. FIG. 3D shows that as a result of this control, the output of the fuel cell module 7B increases, and the power supplied by the fuel cell unit 100B becomes 60% of the rated power. In FIG. 3D, the output of the other fuel cell module (here, 7C) that has not reached rated power output remains unincreased.

FIG. 3E shows that by the above-described control, the power supplied by the fuel cell unit 100B reaches the rated power (100%). At this time, the power supply apparatus 200A (master) performs control to increase the output of only the next fuel cell module (here, 7C) that has not yet reached rated power output, without increasing the output of the other fuel cell modules (7A, 7B). FIG. 3E shows that as a result of this control, the output of the fuel cell module 7C increases, and the power supplied by the fuel cell unit 100C also reaches rated power (100%).

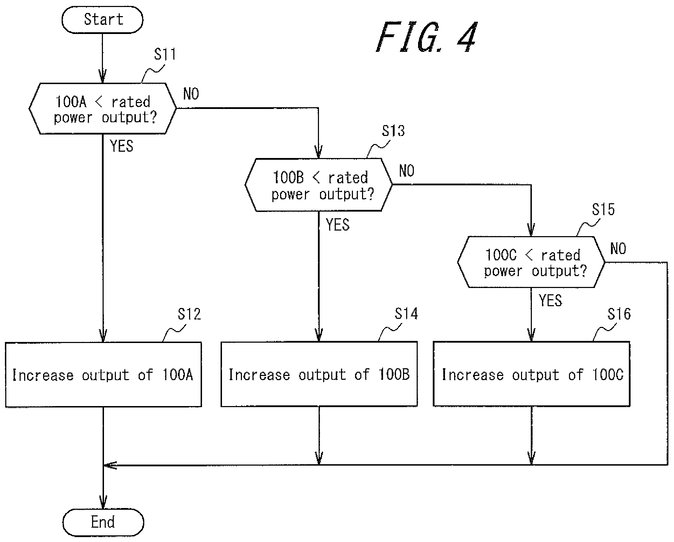

FIG. 4 is a flowchart illustrating the above-described control to allocate output power.

FIG. 4 illustrates processing performed by the controller 4A of the power supply apparatus 200A (master) when the power supply system 1 operates based on the above-described control to allocate output power.

In the power supply system 1, during the control to increase or decrease the output power of the fuel cell modules 7A, 7B, and 7C, the controller 4A of the power supply apparatus 200A (master) provides instructions to the power supply apparatuses 200B and 200C (slaves). In greater detail, the controller 4A of the power supply apparatus 200A (master) can instruct the controllers 4B and 4C of the power supply apparatuses 200B and 200C (slaves) via the communication lines 120 and 140. By communicating with the controllers 4B and 4C via the communication lines 120 and 140, the controller 4A can acquire various information, including the output power of the fuel cell modules 7B and 7C of the fuel cell units 100B and 100C (slaves). The controller 4A can also acquire various information including the output power of the fuel cell module 7A of the fuel cell unit 100A.

Once the power supply apparatuses 200B and 200C (slaves) receive instructions from the power supply apparatus 200A (master), the controllers 4B and 4C perform control to increase or decrease the output of the corresponding fuel cell modules 7B and 7C. The controller 4A performs control to increase or decrease the output of the corresponding fuel cell module 7A.

In other words, the power supply apparatus 200A (master) can acquire information such as the amount of power generated by the power supply apparatuses 200B and 200C (slaves). Also, the power supply apparatus 200A (master) can provide an instruction indicating an amount of power to be generated by the power supply apparatuses 200B and 200C (slaves) to the controllers 4B and 4C. Based on this instruction, the controllers 4B and 4C of the power supply apparatuses 200B and 200C can control the output of the corresponding fuel cell modules 7B and 7C.

Upon the start of the control indicated in FIG. 4, the controller 4A of the power supply apparatus 200A (master) determines whether the output power of the fuel cell module 7A connected to the power supply apparatus 200A has reached the rated power (step S11). When the output power of the fuel cell module 7A has not reached the rated power in step S11, the controller 4A increases the output power of the fuel cell module 7A connected to the power supply apparatus 200A (step S12).

When the output power of the fuel cell module 7A has reached the rated power in step S11, the controller 4A determines whether the output power of the fuel cell module 7B connected to the power supply apparatus 200B has reached the rated power (step S13). When the output power of the fuel cell module 7B has not reached the rated power in step S 13, the controller 4A performs control to increase the output power of the fuel cell module 7B connected to the power supply apparatus 200B (step S14). In greater detail, the controller 4A instructs the controller 4B to increase the power supplied by the power supply apparatus 200B. The controller 4B then increases the output power of the fuel cell module 7B.

On the other hand, when the output power of the fuel cell module 7B has reached the rated power in step S 13, the controller 4A determines whether the output power of the fuel cell module 7C connected to the power supply apparatus 200C has reached the rated power (step S15). When the output power of the fuel cell module 7C has not reached the rated power in step S15, the controller 4A performs control to increase the output power of the fuel cell module 7C connected to the power supply apparatus 200C (step S16). In greater detail, the controller 4A instructs the controller 4C to increase the power supplied by the power supply apparatus 200C. The controller 4C then increases the output power of the fuel cell module 7C.

The processing illustrated in FIG. 4 is preferably repeated at predetermined time intervals. Since the power supply system 1 needs to operate by following the power of the variable load 105, the "predetermined time intervals" may, for example, be intervals of a relatively short time, such as every five seconds.

As described above, in this embodiment, the power supply apparatus 200A controls the output power from the fuel cell module 7A that generates power using combustion gas. The power supply apparatus 200B similarly controls the output power from the fuel cell module 7B that generates power using combustion gas. The power supply apparatus 200C similarly controls the output power from the fuel cell module 7C that generates power using combustion gas.

In this embodiment, the controller 4A in the power supply apparatus 200A performs the following control during operation in parallel with the other power supply apparatuses 200B and 200C that supply output power from the other fuel cell modules 7B and 7C to the load 105. Until one fuel cell module among the fuel cell modules 7A, 7B, and 7C (for example, 7A) reaches rated power output, the controller 4A suppresses the output power from each fuel cell module (for example, 7B and 7C) that has not reached rated power output among fuel cell modules other than the one fuel cell module. In this case, while performing this control, the controller 4A controls the output power from the one fuel cell module (7A). Also, after the one fuel cell module (for example, 7A) reaches rated power output, the controller 4A maintains the output power of the one fuel cell module (7A). In this case, while performing this control, the controller 4A controls the output power from another fuel cell module (for example, 7B), among fuel cell modules (7B and 7C) other than the one fuel cell module, that has not reached the rated power output. More than one of the plurality of fuel cell modules may have the same rated power output, or each may have a different rated power output.

In this way, at the operation start time, the output of only one fuel cell module is increased to the rated power, and the other fuel cell modules that have not reached the rated power output are kept in an idle state (output of 0 kW) in this embodiment. Also, in this embodiment, once the output of only one fuel cell module is increased to the rated power, the output of only one other fuel cell module that has not reached the rated power output is increased to the rated power. Accordingly, in this embodiment, a plurality of fuel cell modules perform control to increase output until reaching their rated power. Therefore, the possibility of combustion stopping in the fuel cell modules can be reduced. Upon keeping the other fuel cell modules in an idle state while the output of only the one fuel cell module is increased to the rated power, the output of the other fuel cell modules is low, which lowers the temperature and may cause combustion to stop. Therefore, to avoid such a situation, the below-described control to switch output power is performed so that no single fuel cell module reaches an extremely low temperature.

FIGS. 3A to 3E and FIG. 4 illustrate control to increase the power supplied by the power supply system 1. By contrast, control to decrease the power supplied by the power supply system 1 can be performed by performing the above-described processing in reverse. For example, as illustrated in FIG. 3E, suppose that all of the fuel cell modules 7A, 7B, and 7C respectively connected to the power supply apparatuses 200A, 200B, and 200C are generating output at the rated power. In these circumstances, when reducing the power supplied by the power supply system 1, first the output of only one fuel cell module (for example, 7C) is reduced (from FIG. 3E to FIG. 3D). Once the output of the fuel cell module 7C is reduced to 0%, only the output of the next fuel cell module (for example, 7B) is reduced (from FIG. 3D to FIG. 3C). Furthermore, once the output of the fuel cell module 7B is reduced to 0%, only the output of the next fuel cell module (for example, 7A) is reduced (from FIG. 3C to FIG. 3A).

In FIGS. 3A to 3E and FIG. 4, the control of the plurality of fuel cell modules is performed in the order of 7A, 7B, and 7C, but the control according to this embodiment is not limited to this example. In this embodiment, such control of a plurality of fuel cell modules can be performed for example based on an order determined in advance in accordance with characteristics of the fuel cells. In this embodiment, the control of the plurality of fuel cell modules may also be performed based on an order that is judged dynamically by the controller 4A of the master power supply apparatus 200A in accordance with the current status of the fuel cell modules 7A to 7C.

### (2) Switching Control of Output Power

Next, the control to switch output power in the power supply system 1 according to this embodiment is described.

During the above-described control, if any of the plurality of fuel cell modules 7A, 7B, and 7C is maintained at a low output for a long time, the combustion in that fuel cell module has a higher probability of stopping. Therefore, in this embodiment, control is performed to switch the output power periodically between a fuel cell module with high output and a fuel cell module with low output.

In order to perform such control, the controller 4A of the power supply apparatus 200A (master) acquires data, for the fuel cell modules 7A, 7B, and 7C, stipulating the correlation between the output power of each module and the possibility of combustion in the module stopping. Such data can be acquired by the controller 4A communicating with the controllers 4B and 4C, and the acquired data can be stored in the memory 6 of the controller 4A.

For example, in the fuel cell module 7A, when the output power exceeds a predetermined threshold, it can be assumed that the fuel cell module 7A is at a relatively high temperature and that the possibility of combustion stopping soon is close to zero. On the other hand, if the output power of the fuel cell module 7A falls below the predetermined threshold, it is thought that the temperature of the fuel cell module 7A is relatively low, and that the possibility of combustion stopping soon becomes high. Therefore, in this embodiment, for the plurality of fuel cell modules 7A, 7B, and 7C, the controller 4A acquires and stores data on the threshold of output power at which the possibility of combustion of each of the fuel cell modules stopping becomes high. The controller 4A waits for the elapse of a time set in accordance with the possibility of combustion of the fuel cell modules 7A, 7B, and 7C stopping and then switches the output power of a high-output fuel cell module and a low-output fuel cell module among the fuel cell modules 7A, 7B, and 7C. This control avoids a situation in which the low-output fuel cell module is maintained at low output for a long time.

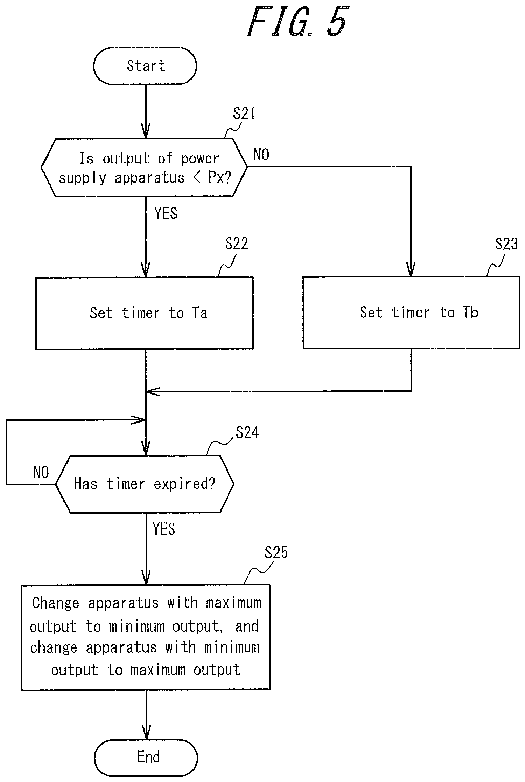

FIG. 5 is a flowchart illustrating the above-described control to switch output power.

As described above, at a point in time at which the control in FIG. 5 begins, the controller 4A of the power supply apparatus 200A (master) acquires data for the fuel cell modules 7A, 7B, and 7C on the threshold (Px) of output power at which the possibility of combustion of the module stopping becomes high. This threshold Px of output power may be the same value for the fuel cell modules 7A, 7B, and 7C or may be a different value in accordance with the characteristics of the fuel cell modules 7A, 7B, and 7C.

Once the control illustrated in FIG. 5 begins, the controller 4A determines whether the output of the power supply apparatuses 200A, 200B, and 200C, i.e. the output of each of the fuel cell modules 7A, 7B, and 7C is less than the threshold Px of output power (step S21).

In step S21, when the output of any fuel cell module is less than Px, the controller 4A performs control so that the controller 4 connected to that fuel cell module 7 counts a predetermined time Ta (step S22). In step S21, when the output of any fuel cell module is not less than Px, the controller 4A performs control so that the controller 4 connected to that fuel cell module 7 counts a predetermined time Tb (step S23).

Here, when the output of the fuel cell module is less than Px, the possibility of combustion stopping soon in the fuel cell module is increased. Therefore, the aforementioned "predetermined time Ta" is set to be shorter than the predetermined time Tb, such as a relatively short time of two minutes or the like. When the output of the fuel cell module is not less than Px, the possibility of combustion stopping in the fuel cell module is low. Therefore, the aforementioned "predetermined time Tb" is set to be a longer time than the predetermined time Ta, such as a relatively long time of four minutes or the like. These predetermined times Ta and Tb may be the same for the fuel cell modules 7A, 7B, and 7C or may be different in accordance with the characteristics of the fuel cell modules 7A, 7B, and 7C. In order to perform such control, the controller 4A sets these predetermined times Ta and Tb in advance for each of the fuel cell modules 7A, 7B, and 7C in accordance with the possibility of combustion of each of the fuel cell modules 7A, 7B, and 7C stopping.

Once the predetermined time Ta or Tb is set in step S22 or step S23, the controller 4A performs control so that the controllers 4A to 4C count the respectively set times (step S24).

Once the respectively set times are counted down in step S24, the controller 4A switches the output power so that among the output of the power supply apparatuses 200A, 200B, and 200C, i.e. the output of the fuel cell modules 7A, 7B, and 7C, the maximum output becomes the minimum output. Also, the controller 4A switches the output power so that among the output of the power supply apparatuses 200A, 200B, and 200C, i.e. the output of the fuel cell modules 7A, 7B, and 7C, the minimum output becomes the maximum output (step S25).

The processing illustrated in FIG. 5 is preferably repeated at predetermined time intervals. In the power supply system 1, even if the fuel cell modules being operated are switched frequently, it is thought that the possibility of combustion stopping in the fuel cell modules will not change too frequently. Therefore, the aforementioned "predetermined time interval" may, for example, be set to a relatively long time interval, such as every three minutes.

As described above, in this embodiment, among the fuel cell modules 7A, 7B, and 7C, the controller 4A in the power supply apparatus 200A switches, at a predetermined timing, the output power of a fuel cell module outputting power of a predetermined threshold or greater and the output power of a fuel cell module not outputting power of a predetermined threshold or greater.

In this way, in this embodiment, operation of a high-output fuel cell module and a low-output fuel cell module is switched periodically. Accordingly, in this embodiment, one fuel cell module is prevented from being maintained at low output for a long time. Therefore, in this embodiment, the possibility of combustion stopping in the fuel cell modules can be reduced.

In FIG. 5, based on the output power of the plurality of fuel cell modules, the output power is switched, but this embodiment is not limited to this configuration. For example, in this embodiment, based on the temperature of the plurality of fuel cell modules, the threshold of output power may be set in step S21, and the predetermined time Ta or Tb may be set in step S22 or step S23.

In FIG. 5, the output power is switched between the fuel cell module with the maximum output and the fuel cell module with the minimum output in step S25. In cases such as when a large number of fuel cell modules operate in parallel, however, the output power may be switched between a group of fuel cell modules with a predetermined output or greater and a group of fuel cell modules with a predetermined output or less. Also, for example with specifications that suppress output when the fuel cell module reaches a high temperature, the output power may be switched between a fuel cell module that is suppressing output in this way and a low-output fuel cell module.

As described above, during low output in the fuel cell module, there is a possibility of the gas flow or the like decreasing and of combustion stopping. Upon combustion of the fuel cell module stopping, it is necessary to ignite the fuel cell module again and increase the temperature until the output voltage is obtained. Therefore, a relatively long time is required until power generation can begin. The temperature of the fuel cell module lowers while idling (output of 0 kW) as well, and there is a possibility of combustion stopping. When performing control to average the output of a plurality of fuel cell modules as conventionally done, the output of each fuel cell module decreases when the power consumption of the load is small, increasing the possibility of combustion stopping. On the other hand, when the output of the fuel cell module is large, the gas flow also increases, and the fuel cell module is maintained at a high temperature. Therefore, there is a lower possibility of combustion stopping. As described above, in this embodiment, the possibility of combustion of the plurality of fuel cell modules stopping is reduced, allowing efficient power generation.

Although the present disclosure is based on the accompanying drawings and on examples, it is to be noted that various changes and modifications will be apparent to those skilled in the art based on the present disclosure. Therefore, such changes and modifications are to be understood as included within the scope of the present disclosure. For example, the functions and the like included in the various functional components, means, and steps may be reordered in any logically consistent way. Furthermore, functional components or steps may be combined into one or divided. The above embodiments of the present disclosure are not limited to being implemented precisely as described and may be implemented by combining or partially omitting the features thereof.

The present disclosure is not limited to the power supply apparatus 200A and may also be implemented as a power supply system that includes a plurality of power supply apparatuses like the power supply apparatuses 200A to 200C. In this case, one of the plurality of power supply apparatuses (for example, 200A) in the system includes the controller 4A. During operation in parallel with the other power supply apparatuses (200B, 200C) among the plurality of power supply apparatuses, the controller 4A controls the output power from one fuel cell module among the plurality of fuel cell modules 7A, 7B, and 7C until the one fuel cell module reaches rated power output, while suppressing the output power from each fuel cell module, other than the one fuel cell module, that has not reached the rated power output.

Furthermore, the present disclosure may be implemented as a power supply method in a power supply system such as the one described above. In this case, this method includes operating the plurality of power supply apparatuses 200A, 200B, and 200C in parallel and controlling the output power from one fuel cell module among the plurality of fuel cell modules 7A, 7B, and 7C until the one fuel cell module reaches rated power output, while suppressing the output power from each fuel cell module, other than the one fuel cell module, that has not reached the rated power output.

Much of the subject matter of the present disclosure is described as a series of operations executed by a computer system and other hardware that can execute program instructions. Examples of the computer system and other hardware include a general-purpose computer, a Personal Computer (PC), a dedicated computer, a workstation, a Personal Communications System (PCS), an electronic notepad, a laptop computer, and other programmable data processing apparatuses. It should be noted that in each embodiment, various operations are executed by a dedicated circuit (for example, individual logical gates interconnected in order to execute a particular function) implemented by program instructions (software), or by a logical block, program module, or the like executed by one or more processors. The one or more processors that execute a logical block, program module, or the like are, for example, one or more of each of the following: a microprocessor, a central processing unit (CPU), an Application Specific Integrated Circuit (ASIC), a Digital Signal Processor (DSP), a Programmable Logic Device (PLD), a Field Programmable Gate Array (FPGA), a controller, a microcontroller, an electronic device, another apparatus designed to be capable of executing the functions disclosed here, and/or a combination of any of the above. The embodiments disclosed herein are, for example, implemented by hardware, software, firmware, middleware, microcode, or a combination of any of these.

The machine-readable, non-transitory storage medium used here may also be configured by a computer-readable, tangible carrier (medium) in the categories of solid-state memory, magnetic disks, and optical discs. Data structures and an appropriate set of computer instructions, such as program modules, for causing a processor to execute the techniques disclosed herein are stored on these media. Examples of computer-readable media include an electrical connection with one or more wires, a magnetic disk storage medium, or another magnetic or optical storage medium (such as a Compact Disc (CD), Digital Versatile Disc (DVD^{®}), and Blu-ray disc^{®} (DVD and Blu-ray disc are each a registered trademark in Japan, other countries, or both)), portable computer disk, Random Access Memory (RAM), Read-Only Memory (ROM), rewritable programmable ROM such as EPROM, EEPROM, or flash memory, another tangible storage medium that can store information, or a combination of any of these. The memory may be provided internal and/or external to a processor/processing unit. As used in the present disclosure, the term "memory" refers to all types of long-term storage, short-term storage, volatile, non-volatile, or other memory. No limitation is placed on the particular type or number of memories, or on the type of medium for memory storage.

### REFERENCE SIGNS LIST

- 1: Power supply system

- 1a, 1b: Gas solenoid valve
- 2: Gas flow meter
- 3: Gas pump
- 4A, 4B, 4C: Controller
- 5: Microcomputer
- 6: Memory
- 7A, 7B, 7C: Fuel cell module
- 8: Cell stack
- 9: Heater
- 10A, 10B, 10C: Power conditioner (inverter)
- 11: DC/DC converter
- 12: Inverter
- 13a, 13b, 13c: Switch
- 100A, 100B, 100C: Fuel cell unit
- 101: Gas meter
- 104: Grid
- 105: Load
- 110A, 110B, 110C: Current sensor
- 120, 140: Communication line
- 200A, 200B, 200C: Power supply apparatus

## Claims

1. A power supply apparatus configured to control output power from a predetermined fuel cell module that generates power using combustion gas, the power supply apparatus comprising:
a controller that, during operation in parallel with one or more other power supply apparatuses that supply output power from one or more other fuel cell modules to a load, controls the output power from one fuel cell module among the predetermined fuel cell module and the other fuel cell modules until the one fuel cell module reaches rated power output, while suppressing the output power from each fuel cell module, other than the one fuel cell module, that has not reached the rated power output.

2. The power supply apparatus of claim 1, wherein after the one fuel cell module reaches the rated power output, the controller controls the output power from another fuel cell module, other than the one fuel cell module, that has not reached the rated power output, while maintaining the output power of the one fuel cell module.

3. The power supply apparatus of claim 1 or 2, wherein at a predetermined timing, among the predetermined fuel cell module and the other fuel cell modules, the controller switches the output power of a fuel cell module that has output of a predetermined threshold or greater with the output power of a fuel cell module that does not have output of a predetermined threshold or greater.

4. A power supply system comprising:
a plurality of fuel cell modules configured to generate power using combustion gas; and
a plurality of power supply apparatuses configured to supply output power to a load from the plurality of fuel cell modules;
wherein one of the plurality of power supply apparatuses comprises a controller that, during operation in parallel with one or more other power supply apparatuses among the plurality of power supply apparatuses, controls the output power from one fuel cell module among the plurality of fuel cell modules until the one fuel cell module reaches rated power output, while suppressing the output power from each fuel cell module, other than the one fuel cell module, that has not reached the rated power output.

5. The power supply system of claim 4, wherein after the one fuel cell module reaches the rated power output, the controller controls the output power from another fuel cell module, other than the one fuel cell module, that has not reached the rated power output, while maintaining the output power of the one fuel cell module.

6. The power supply system of claim 4 or 5, wherein at a predetermined timing, among the plurality of fuel cell modules, the controller switches the output power of a fuel cell module that has output of a predetermined threshold or greater with the output power of a fuel cell module that does not have output of a predetermined threshold or greater.

7. A power supply method used in a power supply system, the power supply system comprising:
a plurality of fuel cell modules configured to generate power using combustion gas; and
a plurality of power supply apparatuses configured to supply output power to a load from the plurality of fuel cell modules;
the power supply method comprising:
operating the plurality of power supply apparatuses in parallel; and
controlling the output power from one fuel cell module among the plurality of fuel cell modules until the one fuel cell module reaches rated power output, while suppressing the output power from each fuel cell module, other than the one fuel cell module, that has not reached the rated power output.

8. The power supply method of claim 7, wherein in the controlling step, after the one fuel cell module reaches the rated power output, the output power from another fuel cell module, other than the one fuel cell module, that has not reached the rated power output is controlled, while the output power of the one fuel cell module is maintained.

9. The power supply method of claim 7 or 8, wherein at a predetermined timing in the controlling step, among the plurality of fuel cell modules, the output power of a fuel cell module that has output of a predetermined threshold or greater is switched with the output power of a fuel cell module that does not have output of a predetermined threshold or greater.
